# EUROPEAN PATENT APPLICATION

(11) **EP 4 851 111 A1**
(43) Date of publication of application: **09.12.2026**
(21) Application number: 25748319.8
(22) Date of filing: 16.01.2025
(51) Int. Cl.: C01B 33/145

(54) **SILICON COMPOUND-CONTAINING LIQUID, SILICON COMPOUND-CONTAINING MATERIAL, AND PRODUCTION METHODS FOR THESE**

(30) Priority: 02.02.2024 JP 2024015040
(71) Applicant: Mitsui Kinzoku Company, Limited, Tokyo 141-8584 (JP)
(72) Inventor: NIKATA, Soichiro, Omuta-shi, Fukuoka 836-0003 (JP); HARA, Syuhei, Omuta-shi, Fukuoka 836-0003 (JP)
(74) Representative: Parker, Andrew James
(86) International application number: PCT/JP2025/001072
(87) International publication number: WO 2025/164321

(57) **Abstract**

A silicon compound-containing liquid of the present invention is a silicon compound-containing liquid containing a silicon compound and water, and has a maximum value of transmittance of 60%T or more as measured by an ultraviolet-visible spectrophotometer in a wavelength range of 400 nm to 900 nm. Further, a method for producing a silicon compound-containing liquid of the present invention includes a mixing step of adding an acidic aqueous solution to a raw material containing silicon, followed by stirring at 15°C or higher and 50°C or lower to obtain a mixed liquid containing a precursor of a silicon compound, and a stirring step of adding a solution containing an organic nitrogen compound to the mixed liquid, followed by stirring at 15°C or higher and 50°C or lower to form a silicon compound-containing liquid.

## Description

### Technical Field

The present invention relates to a silicon compound-containing liquid, a silicon compound-containing material, and production methods for these.

### Background Art

Conventionally, a silicic acid aqueous solution having high dispersibility has improved dispersibility by coordinating an amine or the like to Sio fine particles. In the production of SiO₂ fine particles, a high-boiling point amine has been used as an additive. For example, the porous silica particles disclosed in Patent Literature 1 are obtained by mixing a tetraalkoxysilane and an alkylamine, and performing hydrolysis and condensation reaction of the tetraalkoxysilane. As the alkylamine to be mixed with the tetraalkoxysilane, a high-boiling point amine such as octylamine, decylamine, laurylamine, or oleylamine has been used.

### Citation List

### Patent Literature

Patent Literature 1: WO 2012/099185 A

### Summary of Invention

### Technical Problem

However, at the time of coating film formation using such a silicic acid aqueous solution or SiO₂ fine particles, a problem arose such as poor adhesion of the coating film after drying, due to the influence of SiO₂ fine particles coordinated with an amine or the like, and a high-boiling point amine used as an additive. Accordingly, such materials were unsuitable for coating film formation. In addition, when a silicon-containing raw material was generally prepared as a salt-free basic solution, gelation or suspension was frequently observed over time.

In view of the above problems, an object of the present invention is to provide a silicon compound-containing liquid which is basic and has high transparency and dispersibility, a silicon compound-containing material, and production methods for these.

### Solution to Problem

A silicon compound-containing liquid of the present invention made to solve the above problems is a silicon compound-containing liquid containing a silicon compound and water, and has a maximum value of transmittance of 60%T or more as measured by an ultraviolet-visible spectrophotometer in a wavelength range of 400 nm to 900 nm.

The silicon compound-containing liquid of the present invention is a silicon compound-containing liquid containing a silicon compound and water, and it is preferable that the maximum value of transmittance as measured by an ultraviolet-visible spectrophotometer in a wavelength range of 400 nm to 900 nm is 60%T or more, in terms of excellent transparency and dispersibility.

It is presumed that the silicon compound in the silicon compound-containing liquid of the present invention is present in the containing liquid as an ion in which a silicon atom and an oxygen atom are multi-stage condensed within the containing material. Furthermore, when an organic nitrogen compound is present in the silicon compound-containing liquid of the present invention, it is presumed that, through interaction with the silicon compound, a nitrogen atom or a carbon atom is present in close proximity to a silicon atom.

Examples of the solvent of the silicon compound-containing liquid of the present invention include water and an organic solvent. Examples of the organic solvent include an alcohol solvent, a ketone solvent, an ether solvent, an ester solvent, an aromatic hydrocarbon solvent, and an aliphatic hydrocarbon solvent, and a solvent obtained by mixing such an organic solvent with water may be used. Examples of the alcohol solvent include alcohols having 5 or less carbon atoms (methanol, ethanol, n-propanol, isopropyl alcohol, butanol, ethylene glycol, propylene glycol, and glycerin), and acetone. In addition, it is preferable that the solvent of the silicon compound-containing liquid of the present invention is water in terms of reducing carbon dioxide derived from an organic component generated at the time of firing or the like in the step of producing a coating film, and reducing the influence on the human body and the risk associated with use thereof.

It is preferable that the silicon compound-containing liquid of the present invention has a maximum value of transmittance of 60%T or more as measured by an ultraviolet-visible spectrophotometer in a wavelength range of 400 nm to 900 nm in terms of excellent transparency and dispersibility.

In addition, in the silicon compound-containing liquid of the present invention, the maximum value of transmittance as measured by an ultraviolet-visible spectrophotometer in a wavelength range of 400 nm to 900 nm is more preferably 65%T or more, still more preferably 70%T or more, particularly preferably 80%T or more, more particularly preferably 90%T or more, still more particularly preferably 95%T or more, even more particularly preferably 97%T or more, more especially preferably 99%T or more, still more especially preferably 99.5% or more, and most preferably 100%T. When the measured value exceeds 100%T due to a measurement error or the like of the ultraviolet-visible spectrophotometer used for measurement of transmittance, the measured value is regarded as 100%T.

Further, in the silicon compound-containing liquid of the present invention, at least one of the maximum values of transmittance as measured by an ultraviolet-visible spectrophotometer at a wavelength of 400 nm, 500 nm, 600 nm, 700 nm, 800 nm, or 900 nm is preferably 60%T or more, more preferably 65%T or more, still more preferably 70%T or more, particularly preferably 80%T or more, more particularly preferably 90%T or more, still more particularly preferably 95%T or more, even more particularly preferably 97%T or more, more especially preferably 99%T or more, still more especially preferably 99.5% or more, and most preferably 100%T. When the measured value exceeds 100%T due to a measurement error or the like of the ultraviolet-visible spectrophotometer used for measurement of transmittance, the measured value is regarded as 100%T.

In addition, in the silicon compound-containing liquid of the present invention, the minimum value of transmittance of the silicon compound-containing liquid as measured by an ultraviolet-visible spectrophotometer in a wavelength range of 400 nm to 900 nm is preferably 60%T or more, more preferably 65%T or more, still more preferably 70%T or more, particularly preferably 80%T or more, more particularly preferably 90%T or more, still more particularly preferably 95%T or more, even more particularly preferably 97%T or more, more especially preferably 99%T or more, still more especially preferably 99.5% or more, and most preferably 100%T. When the measured value exceeds 100%T due to a measurement error or the like of the ultraviolet-visible spectrophotometer used for measurement of transmittance, the measured value is regarded as 100%T.

As described above, a liquid in a state where the maximum value of transmittance of the silicon compound-containing liquid of the present invention in a wavelength range of 400 nm to 900 nm is 60%T or more is referred to as "silicon compound-containing liquid" of the present invention. In the present description, unless otherwise specified, the "transmittance" includes both the "initial transmittance" denoting the transmittance of the silicon compound-containing liquid of the present invention adjusted to a liquid temperature of 25°C immediately after formation, and the "transmittance over time" denoting the transmittance of the silicon compound-containing liquid after being allowed to stand for two months from the date of formation of the silicon compound-containing liquid of the present invention in an incubator set at room temperature of 25°C.

Each transmittance of the silicon compound-containing liquid of the present invention as measured by an ultraviolet-visible spectrophotometer is determined by placing 3 g of the silicon compound-containing liquid of the present invention adjusted to room temperature (25°C) into a measurement cell (optical path length: 1 cm), and measuring the ultraviolet-visible absorption spectrum (UV-Vis absorption spectrum) under the following transmittance measurement conditions and in accordance with JIS K 0115, 2004 "General rules for molecular absorptiometric analysis".

### =Transmittance measurement conditions=

· Measurement apparatus: U-2900 spectrophotometer (manufactured by Hitachi High-Tech Corporation)
· Measurement mode: wavelength scan
· Data mode: %T (transmittance)
· Measurement wavelength range: 200 nm to 1000 nm
· Scanning speed: 200 nm/min
· Sampling interval: 1 nm
· Cell length: 10 mm
· Measurement cell: disposable square cell for particle diameter (manufactured by Otsuka Electronics Co., Ltd.)

The "containing liquid" in the present invention refers to a liquid form as described below or a liquid form including a gel, and further, the liquid form is not limited to one in which a solute is dispersed or mixed in a state of a single molecule in a solvent, and also includes an aggregate in which a plurality of molecules are attracted by intermolecular interaction, for example, one in which (1) a multimer molecule, (2) a solvate molecule, (3) a molecular cluster, (4) colloidal particles, or the like is dispersed in a solvent.

Further, the silicon compound-containing liquid of the present invention is a silicon compound-containing liquid containing a silicon compound and water, and has an average particle diameter (D50) of 1000 nm or less as measured by a dynamic light scattering method of particles in the silicon compound-containing liquid.

The silicon compound-containing liquid of the present invention is a silicon compound-containing liquid containing a silicon compound and water, and it is preferable that the average particle diameter (D50) as measured by a dynamic light scattering method of particles in the silicon compound-containing liquid is 1000 nm or less from the viewpoint of excellent transparency and dispersibility.

In the silicon compound-containing liquid of the present invention, it is preferable that in the particle size distribution measurement using a dynamic light scattering method, the average particle diameter (D50) of particles in the silicon compound-containing liquid is 1000 nm or less from the viewpoint of achieving stability due to little change over time, as well as favorable coating film formation with few uncoated areas during film formation, and being able to ensure a sufficient coating weight. In addition, it is preferable that the average particle diameter (D50) of particles in the silicon compound-containing liquid is smaller from the viewpoint of achieving stability due to even smaller change over time, as well as favorable coating film formation with fewer uncoated areas during film formation, and being able to further ensure a sufficient coating weight. The average particle diameter (D50) of particles in the silicon compound-containing liquid is more preferably 900 nm or less, still more preferably 800 nm or less, particularly preferably 700 nm or less, more preferably 600 nm or less, still more preferably 500 nm or less, particularly preferably 400 nm or less, further more preferably 300 nm or less, further still more preferably 200 nm or less, further particularly preferably 100 nm or less, additionally more preferably 80 nm or less, additionally still more preferably 50 nm or less, additionally particularly preferably 30 nm or less, further additionally more preferably 20 nm or less, further additionally still more preferably 10 nm or less, further additionally particularly preferably 5 nm or less, and most preferably 3 nm or less. As described above, a liquid in a state where as a result of measurement of the average particle diameter (D50) of particles in the silicon compound-containing liquid of the present invention using a dynamic light scattering method, the average particle diameter (D50) of the particles is 1000 nm or less is defined as the "silicon compound-containing liquid" of the present invention.

Here, the dynamic light scattering method is a method in which a light scattering intensity from a group of particles that perform Brownian motion by irradiating a solution such as a suspension solution with light such as laser light is measured, and a particle diameter and a distribution are obtained from a temporal variation of the intensity. Specifically, a method for evaluating the particle size distribution is performed in accordance with JIS Z 8828:2019 "Particle size analysis-Dynamic light scattering" using a zeta potential/particle size/molecular weight measurement system (ELSZ-2000 ZS, manufactured by Otsuka Electronics Co., Ltd.). Immediately before the measurement, the solution is filtered through a filter having a pore size of 2 µm, and an ultrasonic treatment was performed at 28 kHz for 3 minutes with an ultrasonic cleaner (manufactured by AS ONE Corporation: VS-100III). The average particle diameter (D50) refers to a median diameter (D50) that is a particle diameter indicating a 50% cumulative value of a cumulative distribution curve. In the present description, unless otherwise specified, the "average particle diameter (D50)" includes both the "initial average particle diameter D50" denoting the average particle diameter (D50) of particles in the silicon compound-containing liquid of the present invention adjusted to a liquid temperature of 25°C immediately after formation, and the "average particle diameter D50 over time" denoting the average particle diameter (D50) of particles in the silicon compound-containing liquid after being allowed to stand for two months from the date of formation of the silicon compound-containing liquid of the present invention in an incubator set at room temperature of 25°C.

Further, in the silicon compound-containing liquid of the present invention, the silicon compound-containing liquid further contains an organic nitrogen compound.

As described above, the silicon compound-containing liquid of the present invention preferably further contains an organic nitrogen compound in addition to the silicon compound and water in terms of high solubility and excellent stability over time.

The organic nitrogen compound according to the present invention includes those ionized in the silicon compound-containing liquid of the present invention. As will be described in detail in the below-mentioned method for producing a silicon compound-containing liquid of the present invention, in the production step, the silicon compound-containing liquid of the present invention is formed by adding a solution containing an organic nitrogen compound to a mixed liquid containing a precursor of a silicon compound, followed by stirring, therefore, it is considered that the substituted organic nitrogen compound is present in the containing liquid as a cation.

The organic nitrogen compound is preferably, for example, a primary amine, a secondary amine, a tertiary amine, or a quaternary ammonium salt in terms of achieving higher solubility and stability over time. In addition, these may be amino alcohols or amino acids. Furthermore, the organic nitrogen compound is more preferably a primary amine, a secondary amine, or a quaternary ammonium salt, and is particularly preferably a primary amine or a quaternary ammonium salt in terms of further enhancing the solubility. In addition, from the viewpoint of ease of volatilization of the organic nitrogen compound when the silicon compound-containing liquid of the present invention is applied to a base material and a film is formed, a primary amine and a secondary amine are more preferable, and a primary amine is particularly preferable.

Examples of the primary amine include methylamine, ethylamine, propylamine, and butylamine. The primary amine may be an amino alcohol, and examples thereof include aminoethanol.

Examples of the secondary amine include dimethylamine, diethylamine, dipropylamine, and dibutylamine. The secondary amine may be an amino alcohol, and examples thereof include diethanolamine.

Examples of the tertiary amine include trimethylamine, triethylamine, and tri-n-propylamine.

Examples of the quaternary ammonium salt include quaternary ammonium cations, anions, and salts. Examples of the quaternary ammonium include alkylimidazolium, pyridinium, pyrrolidium, and tetraalkylammonium. Here, specific examples of the alkylimidazolium include 1-methyl-3-methylimidazolium, 1-ethyl-3-methylimidazolium, 1-propyl-3-methylimidazolium, 1-butyl-3-methylimidazolium, 1-hexyl-3-methylimidazolium, 1-methyl-2,3-dimethylimidazolium, 1-ethyl-2,3-dimethylimidazolium, 1-propyl-2,3-dimethylimidazolium, and 1-butyl-2,3-dimethylimidazolium. Specific examples of the pyridinium and the pyrrolidinium include N-butyl-pyridinium, N-ethyl-3-methyl-pyridinium, N-butyl-3-methyl-pyridinium, N-hexyl-4-(dimethylamino)-pyridinium, N-methyl-1-methylpyrrolidinium, and N-butyl-1-methylpyrrolidinium. Further, specific examples of the tetraalkylammonium include tetramethylammonium, tetraethylammonium, tetrabutylammonium, ethyl-dimethyl-propylammonium, and choline. Examples of the anion that forms a salt with the cation include OH⁻, Cl⁻, Br⁻, I⁻, BF₄⁻, and HSO₄⁻.

Examples of the method of measuring the content of the organic nitrogen compound present in the containing material include gas chromatography (GC), liquid chromatography (LC), mass spectrometry (MS), gas chromatography/mass spectrometry (GC-MS), and liquid chromatography/mass spectrometry (LC-MS), and a method of quantifying N₂ components in a gasified sample with a thermal conductivity meter may be used in combination.

In the silicon compound-containing liquid of the present invention, a Si content in terms of Si atom in the silicon compound-containing liquid is 0.01 mass% or more and 15.0 mass% or less.

In the silicon compound-containing liquid of the present invention, it is preferable that the Si content in terms of Si atom in the silicon compound-containing liquid is 0.01 mass% or more and 15.0 mass% or less from the viewpoint of improving the stability of the containing liquid.

Here, the Si content in the silicon compound-containing liquid of the present invention is calculated by appropriately diluting the containing liquid with dilute hydrochloric acid as necessary, and measuring the Si weight fraction in terms of Si atom in accordance with JIS K0116:2014 using high-frequency inductively coupled plasma emission spectrometry (ICP emission spectrometry (AG-5110, manufactured by Agilent Technologies, Inc.)).

Further, in the silicon compound-containing liquid of the present invention, the pH of the silicon compound-containing liquid is 9.5 or higher.

This is because when the silicon compound-containing liquid of the present invention has a pH of 9.5 or higher, the containing liquid is more excellent in stability. In addition, the pH is more preferably 10 or higher, the pH is still more preferably 10.5 or higher, the pH is particularly preferably 11 or higher, the pH is more particularly preferably 11.5 or higher, and the pH may be 12 or higher or 12.5 or higher. In the present description, unless otherwise specified, the "pH" includes both the "initial pH" which is the pH of the silicon compound-containing liquid of the present invention adjusted to a liquid temperature of 25°C immediately after formation, and the "pH over time" which is the pH of the silicon compound-containing liquid after being allowed to stand for two months from the date of formation of the silicon compound-containing liquid of the present invention in an incubator set at room temperature of 25°C.

Here, the pH of the silicon compound-containing liquid of the present invention is measured after an electrode (standard ToupH electrode 9615S-10D, manufactured by HORIBA, Ltd.) of a pH meter (a glass electrode type hydrogen ion concentration indicator D-51, manufactured by HORIBA, Ltd.) is immersed in the silicon compound-containing liquid of the present invention and it is checked that the liquid temperature is stabilized at 25°C.

Further, the silicon compound-containing liquid of the present invention further contains a compound containing one or more elements selected from the group consisting of Nb, Ta, Mo, W, Ti, Zr, Hf, Cu, Sn, and Zn.

It is presumed that in the silicon compound-containing liquid of the present invention, a silicon compound and a compound containing one or more elements selected from the group are present in the containing liquid as ions in an ionically bonded state. Here, examples of the compound containing one or more elements selected from the group include oxides, alkali metal metalates, alkaline earth metal metalates, chlorides, metalate alkoxides, and polyoxometalates. The silicon compound-containing liquid of the present invention also includes those in which a gel-like precipitate is formed in the "containing liquid".

The content of the compound containing one or more elements selected from the group may be such that, when the total content in moles of each element in terms of metal is represented by X, the molar ratio X/Si of the total content in moles (X) of each element in terms of metal with respect to Si may be 0.05 to 0.1, 0.1 to 0.3, 0.3 to 0.5, 0.5 to 1, 1 to 3, 3 to 5, 5 to 10, or 10 to 20.

The silicon compound-containing liquid of the present invention may further contain a resin.

It is preferable that the silicon compound-containing liquid of the present invention contains a resin, in terms of improving film formability and adhesion to a base material, as the resin is uniformly compatible with the silicon compound and functions to adhere to the base material.

Examples of the resin contained in the silicon compound-containing liquid include a polyolefin-based compound and a polyvinyl-based compound.

The resin contained in the silicon compound-containing liquid of the present invention may be an anionic water-soluble resin and/or a nonionic water-soluble resin.

When the resin contained in the silicon compound-containing liquid of the present invention is an anionic water-soluble resin and/or a nonionic water-soluble resin, the anionic water-soluble resin and/or the nonionic water-soluble resin is uniformly compatible with the silicon compound described above and functions to adhere to the base material, thereby improving the film formability and adhesion to the plastic film base material.

Here, the cationic water-soluble resin is a resin having a positive charge in water at pH = 7 in the polymer and having, for example, any functional group of an amino group, an imino group, a tertiary amine group, a quaternary ammonium group, and a hydrazino group. The anionic water-soluble resin is a resin having a negative charge in water at pH = 7 in the polymer and having, for example, any functional group of a carboxyl group, a sulfone group, a sulfate ester group, and a phosphate ester group. The nonionic water-soluble resin does not correspond to the cationic water-soluble resin or the anionic water-soluble resin described above, and is, for example, a resin having any functional group of a hydroxy group, an ether group, and an amide group in a polymer.

Further, such a resin may be one containing one or more types of water-soluble homopolymers selected from the group consisting of an acrylic polymer, a urethane polymer, a styrene polymer, an olefin polymer, an amide polymer, a siloxane polymer, an epoxy polymer, a vinyl chloride polymer, and a vinyl acetate polymer, and/or water-soluble copolymers formed of two or more types of these polymers. In particular, it is preferable to contain one or more types of water-soluble homopolymers of an acrylic polymer, a styrene polymer, and an olefin polymer, and/or water-soluble copolymers formed of two or more types of these polymers.

The silicon compound-containing liquid of the present invention may further contain a high-boiling point solvent.

The silicon compound-containing liquid of the present invention itself is aqueous, and can be formed into a film by drying at a low temperature of 100°C or lower or by heat drying, but the silicon compound-containing liquid of the present invention containing a high-boiling point solvent can provide SiO₂ fine particles by heating, or leaves only a SiO₂ film after heating. Therefore, it is also possible to combine a high-boiling point solvent with the silicon compound-containing liquid of the present invention as long as the effect of the present invention is not impaired. Here, the high-boiling point solvent is preferably a solvent having a boiling point of higher than 100°C at 1 atm, and may be a solvent having a boiling point of higher than 180°C. Examples thereof include polyhydric alcohol-based solvents and glycol-based solvents (for example, a glycol-based solvent, a glycol ester-based solvent, and a glycol ether-based solvent).

Examples of the polyhydric alcohol-based solvents include glycerin (boiling point: 290°C), 1,6-hexanediol (boiling point: 250°C), and 1,7-heptanediol (boiling point: 259°C). Examples of the glycol-based solvents include ethylene glycol (boiling point: 197.3°C), propylene glycol (boiling point: 188.2°C), diethylene glycol (boiling point: 244.3°C), triethylene glycol (boiling point: 287.4°C), oligoethylene glycol (boiling point: 287°C to 460°C), propylene glycol monomethyl ether acetate (PGMEA) (boiling point: 146.4°C), polyethylene glycol (PEG) (boiling point: 460°C or higher), a polyethylene glycol (PEG)-polypropylene glycol (PPG) copolymer (boiling point: 460°C or higher), diethylene glycol monohexyl ether (boiling point: 260°C), polyoxyalkylene monoalkyl ether (boiling point: 260°C or higher), polyoxyethylene sorbitan monolaurate (boiling point: 321°C or higher), polyvinyl butyral (PVB) (boiling point: 180°C or higher), polyvinyl alcohol (PVA) (boiling point: 180°C or higher), polyetherimide (PEI) (boiling point: 180°C or higher), other anionic fluorosurfactants (boiling point: 180°C or higher), amphoteric fluorosurfactants (boiling point: 180°C or higher), nonionic fluorosurfactants (boiling point: 180°C or higher), and amine oxide (boiling point: 180°C or higher). Particularly preferable examples thereof include glycerin. The above-mentioned boiling points are boiling points at 1 atm.

Since the high-boiling point solvent has a property of having a high boiling point, when the boiling point at 1 atm is excessively high, the high-boiling point solvent may be decomposed before boiling, and an accurate boiling point may not be able to be measured. In such a case, the boiling point under reduced pressure may be measured, and the boiling point at 1 atm may be calculated by using a general-purpose boiling point conversion table.

The silicon compound-containing liquid of the present invention may further contain a low-boiling point solvent.

The silicon compound-containing liquid of the present invention itself is aqueous, and can be formed into a film by drying at a low temperature of 100°C or lower or by heat drying, and the silicon compound-containing liquid of the present invention containing a low-boiling point solvent can further impart a quick drying property by heating. It is also possible to combine a low-boiling point solvent with the silicon compound-containing liquid of the present invention as long as the effect of the present invention is not impaired. Here, the low-boiling point solvent is preferably a solvent having a boiling point of 100°C or lower at 1 atm, and more preferably a solvent having a boiling point of lower than 100°C. Examples thereof include alcohol-based solvents.

Specific examples of the alcohol-based solvents include methanol (boiling point: 64.7°C or higher), ethanol (boiling point: 78.3°C or higher), industrial ethanol, and isopropyl alcohol (boiling point: 82.3°C or higher). Industrial ethanol and isopropyl alcohol are particularly preferable. The above-mentioned boiling points are boiling points at 1 atm.

The silicon compound-containing liquid of the present invention may contain components (referred to as "other components") other than components derived from silicon or silicic acid and components derived from an organic nitrogen compound as inevitable impurities as long as the operation and effect thereof are not inhibited.

A dispersant, a pH adjusting agent, a colorant, a thickener, a wetting agent, a binder resin, or the like may be added to the silicon compound-containing liquid of the present invention as appropriate according to the application.

A method for producing the above-mentioned silicon compound-containing liquid of the present invention will be described below.

A method for producing a silicon compound-containing liquid of the present invention includes a mixing step of adding an acidic aqueous solution to a raw material containing silicon, followed by stirring at 15°C or higher and 50°C or lower to obtain a mixed liquid containing a precursor of a silicon compound, and a stirring step of adding a solution containing an organic nitrogen compound to the mixed liquid, followed by stirring at 15°C or higher and 50°C or lower to form a silicon compound-containing liquid.

First, in the mixing step, an acidic aqueous solution is added to a raw material containing silicon, followed by stirring at 15°C or higher and 50°C or lower to obtain a mixed liquid containing a precursor of a silicon compound.

Examples of the raw material containing silicon include tetraethoxysilane (TEOS), tetramethoxysilane (TMOS), and sodium silicate. The raw material containing silicon is preferably such that the raw material containing silicon contains at least one of tetraethoxysilane and sodium silicate.

Examples of the acidic aqueous solution include carboxylic acid, hydroxy acid, hydrochloric acid, sulfuric acid, and phosphoric acid. As the hydroxy acid, citric acid, lactic acid, tartaric acid, malic acid, or the like can be used. The hydroxy acid also includes various isomers (such as structural isomers and optical isomers). The acidic aqueous solution preferably contains at least one of carboxylic acid, hydroxy acid, hydrochloric acid, sulfuric acid, and phosphoric acid, and more preferably contains at least one of acetic acid, citric acid, lactic acid, tartaric acid, malic acid, hydrochloric acid, and phosphoric acid.

When the acidic aqueous solution is acetic acid, the acetic acid content is preferably 0.001 mass% to 3.0 mass%. When the acetic acid content is 0.001 mass% or more, in a case where the raw material containing silicon is TEOS, a Si-OH structure can be formed by efficiently hydrolyzing a silanol ester group: Si-O-CH₂-OH₃ in TEOS. On the other hand, it is preferable that the acetic acid content is 3.0 mass% or less because the content of acetic acid contained in the silicon compound-containing liquid of the present invention as a final product can be reduced. From such a viewpoint, the acetic acid content is preferably 0.001 mass% or more, more preferably 0.005 mass% or more, and still more preferably 0.01 mass% or more. On the other hand, the acetic acid content is preferably 3.0 mass% or less, more preferably 2.5 mass% or less, still more preferably 2.0 mass% or less, particularly preferably 1.5 mass% or less, more particularly preferably 1.0 mass% or less, still more particularly preferably 0.5 mass% or less, even more particularly preferably 0.1 mass% or less, especially preferably 0.05 mass% or less, more especially preferably 0.04 mass% or less, still more especially preferably 0.03 mass% or less, and even more especially preferably 0.02 mass% or less. The acetic acid content described in the present description is a content when acetic acid is added to the raw material containing silicon in the mixing step unless otherwise specified.

In addition, the acetic acid content in the silicon compound-containing liquid of the present invention is preferably 0.02 mass% to 10 mass%. The acetic acid content is more preferably 0.05 mass% or more, still more preferably 0.1 mass% or more, particularly preferably 0.15 mass% or more, and more particularly preferably 0.2 mass% or more. On the other hand, the acetic acid content is more preferably 5 mass% or less, still more preferably 3 mass% or less, particularly preferably 1 mass% or less, and particularly preferably 0.5 mass% or less.

Furthermore, the addition amount of acetic acid to be added to the raw material containing silicon is preferably such that the molar ratio of CH₃COOH/Si is 0.01 or more and 0.3 or less, more preferably 0.02 or more and 0.25 or less, and still more preferably 0.03 or more and 0.2 or less. Furthermore, the time required for adding acetic acid to be added to the raw material containing silicon is preferably 5 minutes or less, more preferably 3 minutes or less, and still more preferably 1 minute or less. In addition, the acetic acid content in the silicon compound-containing liquid of the present invention is preferably such that the molar ratio of CH₃COOH/Si is preferably 0.01 or more and 0.3 or less, more preferably 0.02 or more and 0.25 or less, and still more preferably 0.03 or more and 0.2 or less.

When the acidic aqueous solution to be added to the raw material containing silicon is hydrochloric acid, the hydrochloric acid content is preferably 0.001 mass% to 3.0 mass%. When the hydrochloric acid content is 0.001 mass% or more, in a case where the raw material containing silicon is sodium silicate, sodium chloride can be efficiently formed from sodium silicate. On the other hand, it is preferable that the hydrochloric acid content is 3.0 mass% or less because chlorine is less likely to remain in the silicon compound-containing liquid of the present invention as a final product. From such a viewpoint, the hydrochloric acid content is preferably 0.001 mass% or more, more preferably 0.005 mass% or more, and still more preferably 0.01 mass% or more. On the other hand, the hydrochloric acid content is preferably 3.0 mass% or less, more preferably 2.5 mass% or less, still more preferably 2.0 mass% or less, particularly preferably 1.5 mass% or less, more particularly preferably 1.0 mass% or less, still more particularly preferably 0.5 mass% or less, even more particularly preferably 0.1 mass% or less, especially preferably 0.05 mass% or less, more especially preferably 0.04 mass% or less, still more especially preferably 0.03 mass% or less, and even more especially preferably 0.02 mass% or less. Unless otherwise specified, the hydrochloric acid content described in the present description is a content when hydrochloric acid is added to the raw material containing silicon in the mixing step, and is a value converted by the weight of HCl in a 0.5 N hydrochloric acid aqueous solution.

In addition, the hydrochloric acid content in the silicon compound-containing liquid of the present invention is preferably 0.02 mass% to 10 mass%. The hydrochloric acid content is more preferably 0.05 mass% or more, still more preferably 0.1 mass% or more, particularly preferably 0.15 mass% or more, and more particularly preferably 0.2 mass% or more. On the other hand, the hydrochloric acid content is more preferably 5 mass% or less, still more preferably 3 mass% or less, particularly preferably 1 mass% or less, and particularly preferably 0.5 mass% or less.

Furthermore, the addition amount of hydrochloric acid to be added to the raw material containing silicon is preferably such that the molar ratio of HCl/Si is 0.5 or more and 1.5 or less, more preferably 0.55 or more and 1.3 or less, and still more preferably 0.6 or more and 1.1 or less. Furthermore, the time required for adding hydrochloric acid to be added to the raw material containing silicon is preferably 10 minutes or less, more preferably 5 minutes or less, and still more preferably 3 minutes or less. In addition, the hydrochloric acid content in the silicon compound-containing liquid of the present invention is preferably such that the molar ratio of HCl/Si is preferably 0.5 or more and 1.5 or less, more preferably 0.55 or more and 1.3 or less, and still more preferably 0.6 or more and 1.1 or less.

In addition, in the mixing step, the liquid temperature of the mixed liquid during stirring after the acidic aqueous solution is added to the raw material containing silicon is preferably 15°C or higher and 50°C or lower, more preferably 20°C or higher and 45°C or lower, and still more preferably 25°C or higher and 40°C or lower. When the liquid temperature of the mixed liquid exceeds 50°C, moisture in the mixed liquid may evaporate excessively, causing dehydration condensation between Si-OH groups in the mixed liquid, partial formation of SiO₂ fine particles, which may result in failure to dissolve upon addition of a solution containing an organic nitrogen compound during the stirring step.

Furthermore, in the mixing step, the time required for stirring after addition of an acidic aqueous solution to the raw material containing silicon varies depending on the type of the raw material containing silicon, the addition amount of the acidic aqueous solution, the reduced pressure conditions, and the like.

Specifically, when the raw material containing silicon is TEOS and the acidic aqueous solution is acetic acid, the time required for stirring is preferably 30 minutes or more and 24 hours or less, more preferably 1 hour or more and 15 hours or less, and still more preferably 2 hours or more and 12 hours or less.

When the raw material containing silicon is sodium silicate and the acidic aqueous solution is hydrochloric acid, the time required for stirring is preferably 10 minutes or more and 10 hours or less, more preferably 30 minutes or more and 7 hours or less, and still more preferably 1 hour or more and 5 hours or less.

In this way, an acidic aqueous solution is added to the raw material containing silicon, followed by stirring at 15°C or higher and 50°C or lower to obtain a mixed liquid containing a precursor of a silicon compound.

It is presumed that in a precursor of a silicon compound, the proportion of linear structures is increased in the structure of silicic acid formed by adding an acidic aqueous solution to the raw material containing silicon. This is presumed from the fact that the maximum absorption intensity attributed to Si-OH stretching vibration is increased in the infrared spectrum measured by a Fourier transform infrared spectrophotometer (FT-IR) described later.

Furthermore, when the raw material containing silicon is tetraethoxysilane and the acidic aqueous solution is acetic acid, the mixed liquid containing a precursor of a silicon compound obtained proceeds to the next stirring step.

On the other hand, when the raw material containing silicon is sodium silicate and the acidic aqueous solution is hydrochloric acid, the mixed liquid containing a precursor of a silicon compound obtained needs to be subjected to the following treatment as a pretreatment for proceeding to the next stirring step. During the stirring described above, a portion of Na of sodium silicate and a portion of Cl of hydrochloric acid react with each other, and the formed NaCl is contained in the precursor of a silicon compound. Therefore, it is preferable to remove NaCl from the precursor of a silicon compound. As a method of removing the NaCl, first, the mixed liquid containing the precursor of a silicon compound is placed in a centrifuge tube and centrifugation is performed (4500 rpm, 10 minutes) to recover a precipitated transparent gel. Next, NaCl can be removed from the precursor of a silicon compound by adding water to the recovered transparent gel, placing the resultant in a centrifuge tube, and performing centrifugation (4500 rpm, 20 minutes) a plurality of times while exchanging water.

Next, in the stirring step, a solution containing an organic nitrogen compound is added to the mixed liquid containing the precursor of a silicon compound, followed by stirring at 15°C or higher and 50°C or lower to form the silicon compound-containing liquid of the present invention.

Examples of the organic nitrogen compound include a primary amine, a secondary amine, a tertiary amine, and a quaternary ammonium salt. The organic nitrogen compound preferably contains at least one of a primary amine, a secondary amine, and a quaternary ammonium salt, and specific examples thereof include methylamine, ethylamine, dimethylamine, diethylamine, and tetramethylammonium hydroxide. A solution containing an organic acid instead of an organic nitrogen compound may be added to the mixed liquid containing the precursor of a silicon compound.

The addition amount of the organic nitrogen compound to be added to the mixed liquid containing the precursor of a silicon compound is preferably such that the molar ratio of amine/Si is 0.5 or more and 15 or less, more preferably 1 or more and 10 or less, and still more preferably 1.5 or more and 5 or less. The addition amount of the organic nitrogen compound to be added to the mixed liquid containing the precursor of a silicon compound is preferably such that the molar ratio of amine/Si is 1.7 or more, more preferably 1.3 or more, and still more preferably 1.3 or more from the viewpoint of forming a silicon compound soluble in the organic nitrogen compound. On the other hand, from the viewpoint of cost reduction, the molar ratio of amine/Si is preferably 1.5 or less, more preferably 1.2 or less, and still more preferably 1 or less.

The time required for the addition of the organic nitrogen compound to be added to the mixed liquid containing the precursor of a silicon compound is preferably 60 minutes or less, more preferably 30 minutes or less, and still more preferably 10 minutes or less.

In the stirring step, the liquid temperature during stirring after the solution containing the organic nitrogen compound is added to the mixed liquid containing the precursor of a silicon compound is preferably 15°C or higher and 50°C or lower, more preferably 20°C or higher and 45°C or lower, and still more preferably 25°C or higher and 40°C or lower. Here, when the liquid temperature during stirring exceeds 50°C, the organic nitrogen compound and the like are evaporated, and therefore the precursor of a silicon compound is hardly dissolved, and the possibility that the precursor of a silicon compound remains increases.

In the stirring step, the time required for stirring after the solution containing the organic nitrogen compound is added to the mixed liquid containing the precursor of a silicon compound is preferably 10 minutes or more and 24 hours or less, more preferably 30 minutes or more and 20 hours or less, and still more preferably 1 hour or more and 15 hours or less.

As described above, the silicon compound-containing liquid of the present invention can be formed by adding the solution containing the organic nitrogen compound to the mixed liquid containing the precursor of a silicon compound, followed by stirring at 15°C or higher and 50°C or lower. As described above, it is presumed that the precursor of a silicon compound becomes more readily solubilized as silicic acid in water by containing a large number of Si-OH structures.

Further, the silicon compound-containing film of the present invention is a silicon compound-containing film formed from the silicon compound-containing liquid of the present invention described above.

The silicon compound-containing film of the present invention includes a dry film obtained by applying the silicon compound-containing liquid of the present invention described above to a surface of a base material, followed by drying, for example, vacuum drying or the like, and a fired film obtained by further firing the obtained dry film. The silicon compound-containing film of the present invention also includes a silicon compound-containing film having different physical properties such as a crystal structure, which is generated by vacuum drying the silicon compound-containing liquid of the present invention, or firing, and may have an amorphous structure, a single crystal structure, or a polycrystalline structure.

Next, the method for producing a silicon compound-containing film of the present invention includes a step of applying, drying, and/or firing the silicon compound-containing liquid of the present invention.

Specifically, among the silicon compound-containing films of the present invention, the method for producing a silicon compound-containing dry film of the present invention includes an application step of applying the silicon compound-containing liquid of the present invention to a surface of a base material, and a film drying step of drying the silicon compound-containing liquid applied to the surface of the base material to obtain a dry film.

Specifically, the silicon compound-containing liquid obtained by the method for producing a silicon compound-containing liquid of the present invention described above is dropped onto the surface of the base material using a syringe while filtering through, for example, a filter having a pore size of 2 µm as necessary, and applied by spin coating (1,500 rpm, 30 seconds). Next, the silicon compound-containing dry film is formed on the surface of the base material by drying at 110°C or higher and lower than 300°C for 30 minutes to 12 hours.

When the silicon compound-containing liquid obtained by the method for producing a silicon compound-containing liquid of the present invention described above is a high-viscosity liquid or is gelled, the silicon compound-containing liquid may be applied onto the surface of the base material using a brush or the like. Next, the silicon compound-containing dry film is formed on the surface of the base material by drying at 110°C or higher and lower than 300°C for 30 minutes to 12 hours. The silicon compound-containing dry film of the present invention can also be formed on the surface of the base material by drying at room temperature or higher and lower than 110°C for a long time of 1 hour to 3 days.

Among the silicon compound-containing films of the present invention, a method for producing a silicon compound-containing fired film of the present invention includes an application step of applying a silicon compound-containing liquid to a surface of a base material, a film drying step of drying the silicon compound-containing liquid applied to the surface of the base material in the air or under vacuum to obtain a dry film, and a film firing step of firing the dry film in the air at a firing temperature of 300°C or higher and 1,200°C or lower for a firing time of 1 hour or more and 12 hours or less to obtain a fired film.

Specifically, the base material on which the silicon compound-containing dry film obtained by applying the silicon compound-containing liquid of the present invention onto the surface of the base material and drying the liquid is formed as described above is placed in a stationary furnace, and fired in the air at a firing temperature of 300°C or higher and 1,200°C or lower for a firing time of 1 hour or more and 12 hours or less to form the silicon compound-containing fired film of the present invention on the surface of the base material.

It is preferable that the organic nitrogen compound contained in the silicon compound-containing liquid of the present invention contains at least one of a primary amine, a secondary amine, and a quaternary ammonium salt having a low boiling point, in terms of the fact that, when the silicon compound-containing liquid of the present invention is applied to the surface of a base material and dried, the organic nitrogen compound is readily volatilized, thereby allowing the drying temperature to be kept low and the drying time to be shortened.

Further, the silicon compound-containing material of the present invention is a silicon compound-containing material containing a silicon compound, in which a maximum absorption intensity in a wavenumber region of 900 cm⁻¹ or more and 1000 cm⁻¹ or less as determined by a Fourier transform infrared spectrophotometer (FT-IR) is defined as P1, a maximum absorption intensity in a wavenumber region of more than 1000 cm⁻¹ and 1100 cm-1 or less is defined as P2, an intensity ratio of the P1 to the P2: P1/P2 is 0.9 to 1.6, and the silicon compound-containing material further has a maximum absorption intensity P3 in a wavenumber region of 2800 cm⁻¹ or more and 4000 cm⁻¹ or less.

In the silicon compound-containing material of the present invention, it is preferable that a maximum absorption intensity in a wavenumber region of 900 cm⁻¹ or more and 1000 cm⁻¹ or less as determined by a Fourier transform infrared spectrophotometer (FT-IR) is defined as P1, a maximum absorption intensity in a wavenumber region of more than 1000 cm⁻¹ and 1100 cm-1 or less is defined as P2, an intensity ratio of the P1 to the P2: P1/P2 is 0.9 to 1.5, and the silicon compound-containing material further has a maximum absorption intensity P3 in a wavenumber region of 2800 cm⁻¹ or more and 4000 cm⁻¹ or less from the viewpoint of excellent transparency and dispersibility.

Although the specific structure of the silicon compound in the silicon compound-containing material of the present invention is unknown, it is predicted that the silicon compound is a compound having a large number of hydrolyzed silanol (Si-OH) groups with a low degree of condensation. Therefore, it is presumed that the compound is present in the containing material as a compound having high hydrophilicity and high water solubility.

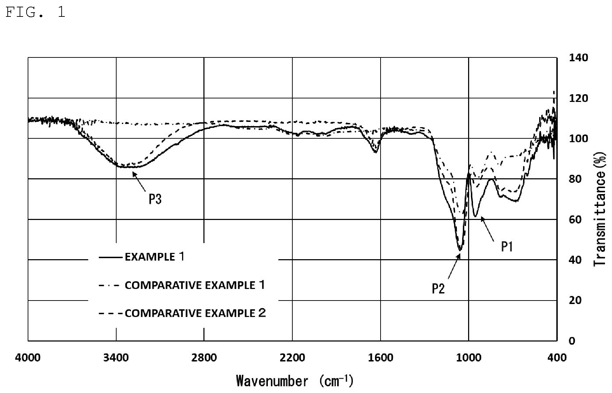

The wavenumber region of 900 cm⁻¹ or more and 1000 cm⁻¹ or less as determined by a Fourier transform infrared spectrophotometer (FT-IR) is attributed to Si-OH stretching vibration, and the maximum absorption intensity in the wavenumber region is defined as P1. In addition, the wavenumber region of 1000 cm⁻¹ or more and 1100 cm⁻¹ or less as determined by a Fourier transform infrared spectrophotometer (FT-IR) is attributed to Si-O-Si stretching vibration, and the maximum absorption intensity in the wavenumber region is defined as P2 (see Fig. 1).

The intensity ratio of P1 to P2: P1/P2 is preferably 0.9 to 1.5, more preferably 1.1 to 1.4, and still more preferably 1.2 to 1.4.

In addition, the silicon compound-containing material of the present invention has a maximum absorption intensity P3 in the wavenumber region of 2800 cm⁻¹ or more and 4000 cm⁻¹ or less as determined by a Fourier transform infrared spectrophotometer (FT-IR) (see Fig. 1). It is more preferable that the FT-IR transmittance of P3 is less than 90%.

The maximum absorption intensities P1, P2, and P3 in the respective wavenumber regions of the silicon compound-containing material of the present invention as measured by a Fourier transform infrared spectrophotometer (FT-IR) described above are determined by measuring an ATR spectrum of the silicon compound-containing material of the present invention as a sample by an attenuated total reflectance method (ATR method) in accordance with the following FT-IR measurement conditions and FT-IR measurement method. As the sample, for example, a transparent crystal obtained by adding an acidic aqueous solution (for example, acetic acid) to a silicon compound (for example, tetraethoxysilane), further adding industrial ethanol in which ethanol or the like is mixed, or pure water, followed by stirring for 10 hours, and mixing is used.

### =FT-IR measurement conditions=

· Measurement apparatus: an IR measurement apparatus "IRAffinity-1", a single-reflection attenuated total reflectance measurement apparatus integrated with sample compartment "MIRacle 10" (both manufactured by Shimadzu Corporation)
· Data mode: %T (transmittance)
· Measurement range: 400-4000 cm⁻¹
· Number of accumulations: 20
· Apodization function: Happ-Genzel
· Detector: Standard
· Resolution: 4 cm⁻¹
· Mirror speed: 2.8 mm/sec
· Software: IR solution version 1.6

In the FT-IR measurement method, first, the background spectrum is measured using IRAffinity-1 in a state where MIRacle 10 is not attached, and then MIRacle 10 is attached to IRAffinity-1. Then, the sample is placed on the diamond prism. Then, the sample and the prism are brought into close contact with each other using a sample clamp, and measurement is performed according to the 16th Revised Japanese Pharmacopoeia. At this time, after the sample is lightly pressed against the prism, it is preferable to slowly turn the knob of the sample clamp to gradually apply pressure. It is also preferable to perform the measurement using a rotary-type tip for the sample clamp.

The method for producing a silicon compound-containing material of the present invention described above includes a drying step of drying a mixed liquid containing a precursor of a silicon compound obtained by adding an acidic aqueous solution to a raw material containing silicon, followed by stirring at 15°C or higher and 50°C or lower to form a silicon compound-containing material.

In the method for producing a silicon compound-containing material of the present invention, the step up to obtaining a mixed liquid containing a precursor of a silicon compound is the same as the mixing step in the method for producing a silicon compound-containing liquid of the present invention described above, and thus the description thereof is omitted.

Next, the obtained mixed liquid containing the precursor of a silicon compound is dried while stirring at 15°C or higher and 50°C or lower to form a silicon compound-containing material.

Specifically, the mixed liquid is placed in a stationary furnace and dried, for example, vacuum dried, while stirring at 15°C or higher and 50°C or lower to evaporate moisture in the mixed liquid, and the silicon compound-containing material of the present invention is obtained.

In the drying step, the liquid temperature of the mixed liquid is preferably 15°C or higher and 50°C or lower, more preferably 20°C or higher and 40°C or lower, and still more preferably 25°C or higher and 40°C or lower.

The time required for the drying step is preferably 1 hour or more and 100 hours or less, more preferably 1 hour or more and 48 hours or less, and still more preferably 3 hours or more and 24 hours or less.

A material obtained by pulverizing the obtained silicon compound-containing material may be used as the silicon compound-containing material of the present invention. Regardless of whether or not the material is pulverized, an undersize fraction (fine particle side) obtained by classifying the silicon compound-containing material containing a silicon compound described above by means of a sieve or the like may also be used as the silicon compound-containing material of the present invention. The oversize fraction (coarse particle side) may be pulverized again and classified for use. It is also possible to combine pulverization and classification by using a vibrating sieve into which iron balls or the like coated with nylon or a fluororesin are charged as pulverization media. By thus combining classification and pulverization, it is possible to remove the silicon compound-containing material containing a silicon compound that is excessively large, even if such a material is present. Specifically, when the material is classified using a sieve, it is preferable to use one having an opening size of 150 µm to 1,000 µm. When the opening size is 150 µm to 1,000 µm, the proportion of the oversize fraction does not become excessively large, repeated re-pulverization is not required, and the silicon compound-containing material containing a silicon compound that requires re-pulverization is not classified into the undersize fraction.

The silicon compound-containing film of the present invention described above can also be formed from the silicon compound-containing material of the present invention.

Specifically, the silicon compound-containing liquid of the present invention can be obtained by adding a solution containing an organic nitrogen compound to the silicon compound-containing material obtained by the method for producing a silicon compound-containing material of the present invention described above, followed by stirring at 15°C or higher and 50°C or lower similarly to the stirring step in the method for producing a silicon compound-containing liquid of the present invention.

Then, the silicon compound-containing film of the present invention can also be formed by applying the obtained silicon compound-containing liquid of the present invention to the surface of a base material, followed by drying and/or firing similarly to the method for producing a silicon compound-containing film of the present invention described above.

Note that, in the present description, the expression "X to Y" (X and Y are arbitrary numbers) also includes the meaning of "preferably more than X" or "preferably less than Y" as well as the meaning of "X or more and Y or less" unless otherwise specified. In addition, the expression "X or more" (X is an arbitrary number) or "Y or less" (Y is an arbitrary number) also includes the intention of "preferably more than X" or "preferably less than Y".

### Advantageous Effects of Invention

The silicon compound-containing liquid of the present invention is basic and excellent in transparency and dispersibility.

### Brief Description of Drawings

Fig. 1 is a graph showing ATR spectra measured by an attenuated total reflectance method using a Fourier transform infrared spectrophotometer (FT-IR) for silicon compound-containing materials according to Example 1 of the present invention and Comparative Examples 1 and 2.
Fig. 2 is a list of physical property values of silicon compound-containing liquids according to Examples 1 to 5 of the present invention and Comparative Examples 1 to 5.
Fig. 3 is a list of measurement results of silicon compound-containing liquids according to Examples 1 to 5 of the present invention and Comparative Examples 1 to 5.

### Best Mode for Carrying Out the Invention

Hereinafter, the silicon compound-containing liquid and the silicon compound-containing material of the embodiments according to the present invention will be further described with reference to the following examples. However, the following examples do not limit the present invention.

### (Example 1)

In a 100 mL beaker, 0.1 g of acetic acid (manufactured by Hayashi Pure Chemical Ind., Ltd.) as an acidic aqueous solution, 15 g of industrial ethanol (Solmix AP-7 (a mixed alcohol solvent containing 85.5 mass% ethanol, 9.6 mass% 1-propanol, 4.9 mass% 2-propanol, and 0.2 mass% or less of water), manufactured by Toyo Petrochemical Co., Ltd.), and 8 g of pure water were added to 11.0 g of tetraethoxysilane (TEOS, manufactured by TOKYO OHKA KOGYO CO., LTD.) as a raw material containing silicon, and the mixture was mixed at room temperature (25°C) for 20 hours while stirring with a stirrer chip to obtain a dried precursor of a silicon compound (corresponding to the silicon compound-containing material of the present invention) as a transparent precipitate.

Here, an ATR spectrum obtained by measuring the obtained dried precursor of a silicon compound according to the FT-IR measurement conditions described above is shown in Fig. 1. As shown in Fig. 1, a wavenumber region of 900 cm⁻¹ or more and 1000 cm⁻¹ or less was attributed to Si-OH stretching vibration, and the maximum absorption intensity in the wavenumber region was defined as P1. Further, a wavenumber region of 1000 cm⁻¹ or more and 1100 cm⁻¹ or less was attributed to Si-O-Si stretching vibration, and the maximum absorption intensity in the wavenumber region was defined as P2. The intensity ratio of P1 to P2: P1/P2 was 1.38.

As shown in Fig. 1, the maximum absorption intensity in a wavenumber region of 2800 cm⁻¹ or more and 4000 cm⁻¹ or less was defined as P3, and the FT-IR transmittance of P3 was 85% (see Table 1).

Next, 6.5 g of 40 mass% methylamine (manufactured by MITSUBISHI GAS CHEMICAL COMPANY, INC.) and 5 g of pure water were added to the obtained dried precursor of a silicon compound, and the mixture was mixed at room temperature (25°C) for 10 hours while stirring with a stirrer chip to obtain a silicon compound-containing liquid according to Example 1.

### (Example 2)

In a 2 L beaker, a solution prepared by mixing 100 g of sodium silicate (Silicate Soda No. 1-53, manufactured by Fuji Chemical Co., Ltd.) as a raw material containing silicon and 30 g of pure water was slowly added to 800 g of 0.5 N hydrochloric acid (acidic aqueous solution) obtained by mixing 35 mass% hydrochloric acid (manufactured by FUJIFILM Wako Pure Chemical Corporation) and pure water, and the mixture was mixed at room temperature (25°C) for 3 hours while stirring with a stirrer chip to obtain a mixed liquid containing a precursor of a silicon compound.

The resulting mixed liquid containing a precursor of a silicon compound was placed in a centrifuge tube, centrifugation was performed (4500 rpm, 10 minutes), and the precipitated precursor of a silicon compound (transparent gel) was recovered. In order to remove NaCl contained in the recovered precursor of a silicon compound, the precursor of a silicon compound and 200 g of water were placed in a centrifuge tube, and centrifugation was performed (4500 rpm, 20 minutes). This operation was repeated 6 times while replacing water each time to remove NaCl contained in the precursor of a silicon compound.

Next, 98 g of 40 mass% methylamine and 167 g of pure water were added to the precursor of a silicon compound from which NaCl had been removed, and the mixture was mixed at room temperature (25°C) for 1 hour while stirring with a stirrer chip to obtain a silicon compound-containing liquid according to Example 2.

### (Example 3)

A silicon compound-containing liquid according to Example 3 was obtained in the same manner as in Example 1 by adding 3.5 g of 1,1,3,3-tetramethylguanidine (hereinafter, referred to as "guanidine", manufactured by TOKYO OHKA KOGYO CO., LTD.) and 5 g of pure water to the obtained precursor of a silicon compound, and mixing the mixture at room temperature (25°C) for 10 hours while stirring with a stirrer chip.

### (Example 4)

A silicon compound-containing liquid according to Example 4 was obtained in the same manner as in Example 1 by adding 3.5 g of 40 mass% methylamine (manufactured by FUJIFILM Wako Pure Chemical Corporation), 3.5 g of 50 mass% dimethylamine (manufactured by TOKYO OHKA KOGYO CO., LTD.), 3.5 g of 30 mass% trimethylamine (manufactured by FUJIFILM Wako Pure Chemical Corporation), 3.5 g of 25 mass% tetramethylammonium hydroxide (manufactured by FUJIFILM Wako Pure Chemical Corporation), 3.5 g of guanidine (manufactured by TOKYO OHKA KOGYO CO., LTD.), and 5 g of pure water to the obtained precursor of a silicon compound, and mixing the mixture at room temperature (25°C) for 10 hours while stirring with a stirrer chip.

### (Example 5)

A silicon compound-containing liquid according to Example 5 was obtained in the same manner as in Example 3 by adding 3.5 g of a tantalate compound-containing liquid, 3.5 g of a niobate compound-containing liquid, 3.5 g of a tungstate compound-containing liquid, and 3.5 g of a molybdate compound-containing liquid to the obtained silicon compound-containing liquid, and mixing the mixture at room temperature (25°C) for 10 minutes while stirring with a stirrer chip.

The tantalate compound-containing liquid used in Example 5 was obtained as follows.

In 120 g of a 55 mass% hydrofluoric acid aqueous solution, 137.9 g of tantalum hydroxide (Ta₂O₅ concentration: 66 mass%) manufactured by Mitsui Mining & Smelting Co., Ltd. was dissolved, and 849 mL of ion-exchanged water was added thereto to obtain a tantalum fluoride aqueous solution (Ta₂O₅ concentration: 8.2 mass%).

To 1,000 g of this tantalum fluoride aqueous solution, 27.5 g of hydrogen peroxide water (H₂O₂ concentration: 35 mass%) (H₂O₂/Ta molar ratio = 0.76) was added, followed by stirring for 5 minutes to obtain a tantalum compound aqueous solution.

To 6.82 L of ammonia water (NH₃ concentration: 25 mass%), 1,000 g of this tantalum compound aqueous solution was added in a time shorter than 10 minutes (NH₃/Ta molar ratio = 245, NH₃/HF molar ratio = 30.7) to obtain a reaction liquid (pH 11). This reaction liquid was a slurry of a tantalate compound hydrate, in other words, a slurry of a tantalum-containing precipitate.

Next, this reaction liquid was decanted using a centrifuge and washed until the amount of fluoride ions released reached 100 mg/L or less to obtain a tantalum-containing precipitate from which the fluoride ions had been removed. At this time, ammonia water was used as the washing liquid.

Further, the tantalum-containing precipitate from which the fluoride ions had been removed was diluted with pure water to obtain a tantalum-containing precipitate slurry. A portion of the tantalum-containing precipitate slurry was dried at 110°C for 24 hours and then fired at 1,000°C for 4 hours to form Ta₂O₅, and the concentration of Ta₂O₅ contained in the tantalum-containing precipitate slurry was calculated from the weight thereof.

Then, the tantalum-containing precipitate slurry diluted with pure water, 5 mass% dimethylamine as an organic nitrogen compound, and pure water were mixed so that the tantalum concentration of the final mixture was 5 mass% in terms of Ta₂O₅ and the weight ratio of Ta₂O₅/organic nitrogen compound was 1.0 to obtain the tantalate compound-containing liquid used in Example 5. The pH of the tantalate compound-containing liquid used in Example 5 was 12.0.

The niobate compound-containing liquid used in Example 5 was obtained as follows.

In 200 g of a 55 mass% hydrofluoric acid aqueous solution, 100 g of niobium pentoxide was dissolved, and 830 mL of ion-exchanged water was added thereto to obtain a niobium fluoride aqueous solution (Nb₂O₅ = 8.84 mass%).

To 1 L of ammonia water (NH₃ concentration: 25 mass%), 200 mL of this niobium fluoride aqueous solution was added in a time shorter than 1 minute (NH₃/Nb₂O₅ molar ratio = 177.9, NH₃/HF molar ratio = 12.2) to obtain a reaction liquid (pH 11). This reaction liquid was a slurry of a niobate compound hydrate, in other words, a slurry of a niobium-containing precipitate.

Next, this reaction liquid was decanted using a centrifuge and washed until the amount of fluoride ions released reached 100 mg/L or less to obtain a niobium-containing precipitate from which the fluoride ions had been removed. At this time, ammonia water was used as the washing liquid.

Further, the niobium-containing precipitate from which the fluoride ions had been removed was diluted with pure water to obtain a slurry. A portion of the niobium-containing precipitate slurry was dried at 110°C for 24 hours and then fired at 1000°C for 4 hours to form Nb₂O₅, and the concentration of Nb₂O₅ contained in the niobium-containing precipitate slurry was calculated from the weight thereof.

Then, the niobium-containing precipitate slurry diluted with pure water, 50 mass% dimethylamine as an organic nitrogen compound, and pure water were mixed so that the niobium concentration of the final mixture was 5 mass% in terms of Nb₂O₅ and the weight ratio of Nb₂O₅/organic nitrogen compound was 2.0 to obtain the niobate compound-containing liquid used in Example 5. The pH of the niobate compound-containing liquid used in Example 5 was 11.0.

The tungstate compound-containing liquid used in Example 5 was obtained as follows.

In 200 g of a 55 mass% sulfuric acid aqueous solution, 100 g of tungsten trioxide was dissolved, and ion-exchanged water was added thereto to obtain a tungsten sulfate aqueous solution containing 100 g/L of tungsten in terms of WO₃. To 1 L of ammonia water (NH₃ concentration: 25 mass%), 200 mL of this tungsten sulfate aqueous solution was added in a time shorter than 1 minute (NH₃/WO₃ molar ratio = 170.47, NH₃/SO₄²⁻ molar ratio = 13.11) to obtain a reaction liquid (pH 11). This reaction liquid was a slurry of a tungstate compound hydrate, in other words, a slurry of a tungsten-containing precipitate.

Next, this reaction liquid was decanted using a centrifuge and washed until the conductivity reached 500 µS/cm or less to obtain a tungsten-containing precipitate from which sulfur components had been removed. At this time, ammonia water was used as the washing liquid.

Further, the tungsten-containing precipitate from which sulfur components had been removed was diluted with pure water to obtain a tungsten-containing precipitate slurry from which sulfur components had been removed. A portion of the tungsten-containing precipitate slurry from which sulfur components had been removed was dried at 110°C for 24 hours and then fired at 1,000°C for 4 hours to form WO₃, and the concentration of WO₃ contained in the tungsten-containing precipitate slurry from which sulfur components had been removed was calculated from the weight thereof.

The tungsten-containing precipitate slurry, from which sulfur components had been removed, diluted with pure water was then mixed with 2 mass% methylamine and pure water such that the tungsten concentration of the final mixture became 10 mass% in terms of WO₃, and this mixture was maintained at a liquid temperature of room temperature (25°C) for 1 hour while stirring to obtain the tungstate compound-containing liquid used in Example 5. The pH of the tungstate compound-containing liquid used in Example 5 was 8.2.

The molybdate compound-containing liquid used in Example 5 was obtained as follows.

In 200 g of a 55 mass% sulfuric acid aqueous solution, 100 g of molybdenum trioxide was dissolved, and ion-exchanged water was added thereto to obtain a molybdenum sulfate aqueous solution containing 100 g/L of molybdenum in terms of MoO₃. To 1 L of ammonia water (NH₃ concentration: 25 mass%), 200 mL of this molybdenum sulfate aqueous solution was added in a time shorter than 1 minute (NH₃/MoO₃ molar ratio = 105.66, NH₃/SO₄²⁻ molar ratio = 65.56) to obtain a reaction liquid (pH 11). This reaction liquid was a slurry of a molybdate compound hydrate, in other words, a slurry of a molybdenum-containing precipitate.

Next, this reaction liquid was decanted using a centrifuge and washed until the conductivity reached 500 µS/cm or less to obtain a molybdenum-containing precipitate from which sulfur components had been removed. At this time, ammonia water was used as the washing liquid.

Further, the molybdenum-containing precipitate from which sulfur components had been removed was diluted with pure water to obtain a molybdenum-containing precipitate slurry from which sulfur components had been removed. A portion of the molybdenum-containing precipitate slurry from which sulfur components had been removed was dried at 110°C for 24 hours and then fired at 1,000°C for 4 hours to form MoO₃, and the concentration of MoO₃ contained in the molybdenum-containing precipitate slurry from which sulfur components had been removed was calculated from the weight thereof.

The molybdenum-containing precipitate slurry, from which sulfur components had been removed, diluted with pure water was then mixed with 2 mass% methylamine and pure water such that the molybdenum concentration of the final mixture became 10 mass% in terms of MoO₃, and this mixture was maintained at a liquid temperature of room temperature (25°C) for 1 hour while stirring to obtain the molybdate compound-containing liquid used in Example 5. The pH of the molybdate compound-containing liquid used in Example 5 was 9.7.

### (Comparative Example 1)

In Comparative Example 1, a silicon compound-containing liquid according to Comparative Example 1 was obtained by performing a production method similar to that in Example 1 except that 1 g of water was added to 11.0 g of tetraethoxysilane (TEOS, manufactured by TOKYO OHKA KOGYO CO., LTD.), which is a raw material containing silicon. A precipitate was confirmed in the silicon compound-containing liquid according to Comparative Example 1.

### (Comparative Example 2)

In Comparative Example 2, a silicon compound-containing liquid according to Comparative Example 2 was obtained by performing a production method similar to that in Example 1 except that 1 g of 25 mass% ammonia water was added, instead of an acidic aqueous solution, to 11.0 g of tetraethoxysilane (TEOS, manufactured by TOKYO OHKA KOGYO CO., LTD.) as a raw material containing silicon, and the obtained mixed liquid containing the precursor of a silicon compound was stirred for 1 hour. A precipitate was confirmed in the silicon compound-containing liquid according to Comparative Example 2.

### (Comparative Example 3)

In Comparative Example 3, a silicon compound-containing liquid according to Comparative Example 3 was obtained by performing a production method similar to that in Example 1 except that the obtained mixed liquid containing the precursor of a silicon compound was heated to 80°C and stirred for 3 hours. A precipitate was confirmed in the silicon compound-containing liquid according to Comparative Example 3.

### (Comparative Example 4)

In Comparative Example 4, a silicon compound-containing liquid according to Comparative Example 4 was obtained by performing a production method similar to that in Example 1 except that 20 g of 30 mass% trimethylamine (manufactured by FUJIFILM Wako Pure Chemical Corporation) and 20 g of pure water were added to the obtained mixed liquid containing the precursor of a silicon compound. A precipitate was confirmed in the silicon compound-containing liquid according to Comparative Example 4.

### (Comparative Example 5)

In Comparative Example 5, a silicon compound-containing liquid according to Comparative Example 5 was obtained by performing a production method similar to that in Example 1 except that 20 g of 25 mass% ammonia (manufactured by FUJIFILM Wako Pure Chemical Corporation) and 20 g of pure water were added to the obtained mixed liquid containing the precursor of a silicon compound. A precipitate was confirmed in the silicon compound-containing liquid according to Comparative Example 5.

Then, the following physical properties were measured for the silicon compound-containing liquids according to Examples 1 to 5 and Comparative Examples 1 to 5. Hereinafter, the measured physical property values and the methods for measuring the physical property values are shown, and the measurement results are shown in Figs. 1 to 3 and Table 1.

### <Elemental analysis>

A sample was appropriately diluted with dilute hydrochloric acid as necessary, and the Si weight fraction in terms of Si atom was measured by ICP emission spectrometry (AG-5110, manufactured by Agilent Technologies, Inc.). In Example 5, the Ta weight fraction in terms of Ta atom, the Nb weight fraction in terms of Nb atom, the W weight fraction in terms of W atom, and the Mo weight fraction in terms of Mo atom were also measured in the same manner.

### <Transmittance measurement>

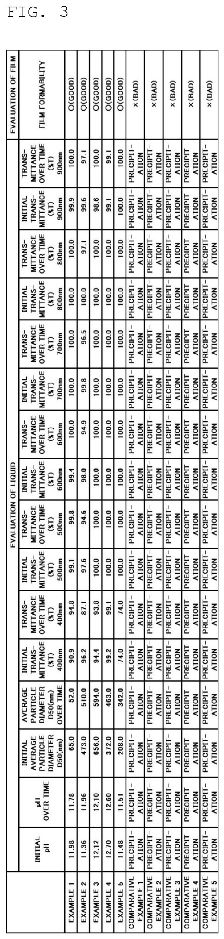

In a measurement cell (optical path length: 1 cm), 4 ml of each of the silicon compound-containing liquids according to Examples 1 to 5 adjusted to room temperature (25°C) was placed, and measurement was performed according to the above-mentioned transmittance measurement conditions. The "initial transmittance" in Fig. 3 refers to the transmittance of a silicon compound-containing liquid which was adjusted to a liquid temperature of 25°C immediately after formation. The "transmittance over time" in Fig. 3 refers to the transmittance of a silicon compound-containing liquid after being allowed to stand for two months in an incubator set at a room temperature of 25°C. In the silicon compound-containing liquids according to Comparative Examples 1 to 5, since a precipitate was confirmed in the containing liquid, the transmittance was not measured.

### <Dynamic light scattering method>

The particle size distribution was evaluated by a dynamic light scattering method in accordance with JIS Z 8828:2019 using a zeta potential/particle size/molecular weight measurement system (ELSZ-2000, manufactured by Otsuka Electronics Co., Ltd.). In order to remove dust and the like in the silicon compound-containing liquid according to each of Examples 1 to 5 to be measured immediately before measurement, the containing liquid was filtered through a filter having a pore size of 1 µm to perform filtering. Then, an ultrasonic treatment was performed at 28 kHz for 3 minutes using an ultrasonic cleaner (manufactured by AS ONE Corporation: VS-100III), and a dispersion treatment using ultrasonic waves was performed. Further, D50 represents a particle diameter at which 50% is reached in terms of volume fraction. The "initial average particle diameter D50 (nm)" in Fig. 3 refers to the average particle diameter (D50) of particles in a silicon compound-containing liquid immediately after formation. The "average particle diameter D50 over time (nm)" in Fig. 3 refers to the average particle diameter (D50) of particles in a silicon compound-containing liquid after being allowed to stand for two months in an incubator set at a room temperature of 25°C. In the silicon compound-containing liquids according to Comparative Examples 1 to 5, since a precipitate was confirmed in the containing liquid, the average particle diameter (D50) was not measured.

### <FT-IR measurement>

The maximum absorption intensity P1 (%) in a wavenumber region of 900 cm⁻¹ or more and 1000 cm⁻¹ or less attributed to Si-OH stretching vibration, the maximum absorption intensity P2 (%) in a wavenumber region of 1000 cm⁻¹ or more and 1,100 cm⁻¹ or less attributed to Si-O-Si stretching vibration, and the maximum absorption intensity P3 (%) in a wavenumber region of 2,800 cm⁻¹ or more and 4,000 cm⁻¹ or less were measured by measuring ATR spectra by an ATR method using a Fourier transform infrared spectrophotometer in accordance with the FT-IR measurement conditions and FT-IR measurement method described above using the dried precursors of the silicon compounds according to Example 1 and Comparative Examples 1 and 2 as samples. The intensity ratio of P1 to P2: P1/P2 was calculated. ATR spectra of precursors of silicon compounds according to Example 1 and Comparative Examples 1 and 2 are shown in Fig. 1. In addition, measured values of P1, P2, and P3 and calculated values of P1/P2 are shown in Table 1.

### <Measurement of pH>

The pH was measured after an electrode (standard ToupH electrode 9615S-10D, manufactured by HORIBA, Ltd.) of a pH meter (a glass electrode type hydrogen ion concentration indicator D-51, manufactured by HORIBA, Ltd.) was immersed in each of the silicon compound-containing liquids according to Examples 1 to 5, and it was checked that the liquid temperature was stabilized at 25°C. The "initial pH" in Fig. 3 refers to the pH of a silicon compound-containing liquid which was adjusted to a liquid temperature of 25°C immediately after formation. The "pH over time" in Fig. 3 refers to the pH of a silicon compound-containing liquid after being allowed to stand for two months in an incubator set at a room temperature of 25°C. In the silicon compound-containing liquids according to Comparative Examples 1 to 5, since a precipitate was confirmed in the containing liquid, the pH was not measured.

### <Film formability test>

The appearance of the coating film formed on the surface of the glass substrate was evaluated by observation with an optical microscope. First, the silicon compound-containing liquids according to Examples 1 to 5 and Comparative Examples 1 to 5 were dropped onto 50 mm × 50 mm glass substrates that had been degreased and cleaned with acetone and then dried, using a syringe while filtering through a filter having a pore size of 1 µm, and applied by spin coating (700 rpm for 10 seconds, followed by 1,500 rpm for 15 seconds). Then, the coated portions were dried at 100°C for 30 minutes to form coating films on the glass substrates. In a central area of 15 mm × 15 mm of the formed coating film, the glass substrate was observed using an optical microscope (magnification: 40 times), and samples in which no particles were present and a film was formed were evaluated as "○ (GOOD)" as being excellent in film formability, while samples in which particles were observed were evaluated as "× (BAD)" as not being excellent in film formability.

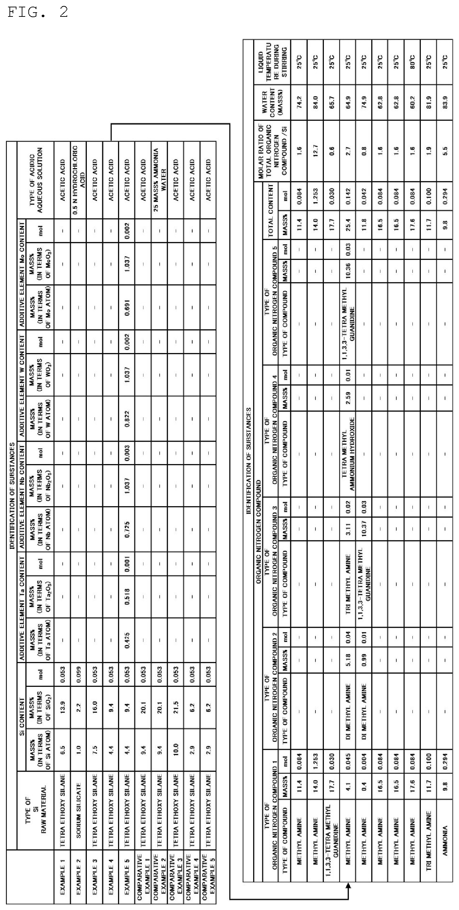

As shown in Figs. 2 and 3, the silicon compound-containing liquids according to Examples 1 to 5 were silicon compound-containing liquids containing a silicon compound and water, and were excellent in transparency and dispersibility when the maximum value of transmittance as measured by an ultraviolet-visible spectrophotometer in a wavelength range of 400 nm to 900 nm was 60%T or more.

The silicon compound-containing liquids according to Examples 1 to 5 were silicon compound-containing liquids containing a silicon compound and water, and were excellent in transparency and dispersibility when the average particle diameter (D50) as measured by a dynamic light scattering method of particles in the silicon compound-containing liquid was 1000 nm or less.

The silicon compound-containing liquids according to Examples 1 to 5 had high solubility and excellent stability over time due to incorporation of an organic nitrogen compound.

In the silicon compound-containing liquids according to Examples 1 to 5, the Si content in terms of Si atom in the silicon compound-containing liquid was 0.01 mass% or more and 15.0 mass% or less, so that the stability of the containing liquid was improved.

When the silicon compound-containing liquids according to Examples 1 to 5 had a pH of 9.5 or higher, the stability of the containing liquid was improved.

The silicon compound-containing liquid according to Example 5 further contained a compound containing one or more elements selected from the group consisting of Nb, Ta, Mo, W, Ti, Zr, Hf, Cu, Sn, and Zn, and was excellent in transparency and dispersibility.

As shown in Fig. 1 and Table 1, the silicon compound-containing material according to Example 1 is a silicon compound-containing material containing a silicon compound, and was excellent in transparency and dispersibility when the maximum absorption intensity in a wavenumber region of 900 cm⁻¹ or more and 1000 cm⁻¹ or less as determined by a Fourier transform infrared spectrophotometer was defined as P1, the maximum absorption intensity in a wavenumber region of more than 1000 cm⁻¹ and 1100 cm⁻¹ or less was defined as P2, an intensity ratio of the P1 to the P2: P1/P2 is 0.9 to 1.5, and the silicon compound-containing material further has a maximum absorption intensity P3 in a wavenumber region of 2800 cm⁻¹ or more and 4000 cm⁻¹ or less.

**[Table 1]**

| | **FT-IR transmittance (%)** | | | |
|---|---|---|---|---|
| | **P1 (Si-OH) 900-1000cm⁻¹** | **P2 (Si-O-Si) 1000-1100cm⁻¹** | **P3 2000-4000cm⁻¹** | **P1/P2** |
| **EXAMPLE 1** | **62** | **45** | **85** | **1.38** |
| **EXAMPLE 2** | **-** | **-** | **-** | **-** |
| **COMPARATIVE EXAMPLE 1** | **80** | **63** | **100** | **1.29** |
| **COMPARATIVE EXAMPLE 2** | **76** | **45** | **85** | **1.68** |
| **COMPARATIVE EXAMPLE 3** | **76** | **53** | **100** | **1.43** |
| **COMPARATIVE EXAMPLE 4** | **58** | **42** | **85** | **1.38** |
| **COMPARATIVE EXAMPLE 5** | **58** | **42** | **85** | **1.38** |

The invention disclosed in the present description includes, in addition to the configurations of the respective inventions and embodiments, those specified by changing partial configurations thereof to other configurations disclosed in the present description, those specified by adding other configurations disclosed in the present description to the configurations thereof, or those specified by deleting partial configurations thereof to the extent that a partial operational effect can be obtained to create a higher concept to the applicable extent.

### Industrial Applicability

The silicon compound-containing liquid according to the present invention is basic and has high dispersibility, and is suitable as a coating material or a composite material with high film adhesion and film uniformity. Furthermore, the silicon compound-containing liquid according to the present invention is excellent in storage stability, and since the occurrence rate of defective products due to the generation of a precipitate over time can be suppressed, waste can be reduced, and energy costs in the disposal of waste can also be reduced. Furthermore, since the silicon compound-containing liquid according to the present invention also exhibits good coating film formation, waste can similarly be reduced and the occurrence rate of defective products can also be suppressed in coated materials that have been coated. These advantages lead to sustainable management and efficient advantages of natural resources, as well as the achievement of decarbonization (carbon neutrality).

## Claims

1. A silicon compound-containing liquid comprising a silicon compound and water, wherein a maximum value of transmittance as measured by an ultraviolet-visible spectrophotometer in a wavelength range of 400 nm to 900 nm is 60%T or more.

2. The silicon compound-containing liquid according to claim 1, wherein a maximum value of transmittance of the silicon compound-containing liquid as measured by an ultraviolet-visible spectrophotometer in the wavelength range of 400 nm to 900 nm is 90%T or more.

3. The silicon compound-containing liquid according to claim 1, wherein at least one of maximum values of transmittance of the silicon compound-containing liquid as measured by an ultraviolet-visible spectrophotometer at a wavelength of 400 nm, 500 nm, 600 nm, 700 nm, 800 nm, or 900 nm is 60%T or more.

4. The silicon compound-containing liquid according to claim 1, wherein a minimum value of transmittance of the silicon compound-containing liquid as measured by an ultraviolet-visible spectrophotometer in the wavelength range of 400 nm to 900 nm is 60%T or more.

5. A silicon compound-containing liquid comprising a silicon compound and water, wherein an average particle diameter (D50) of particles in the silicon compound-containing liquid as measured by a dynamic light scattering method is 1000 nm or less.

6. The silicon compound-containing liquid according to claim 5, wherein an average particle diameter (D50) of particles in the silicon compound-containing liquid as measured by a dynamic light scattering method is 100 nm or less.

7. The silicon compound-containing liquid according to any one of claims 1 to 6, wherein the silicon compound-containing liquid further contains an organic nitrogen compound.

8. The silicon compound-containing liquid according to any one of claims 1 to 6, wherein a Si content in terms of Si atom in the silicon compound-containing liquid is 0.01 mass% or more and 15.0 mass% or less.

9. The silicon compound-containing liquid according to any one of claims 1 to 6, wherein a pH of the silicon compound-containing liquid is 9.5 or higher.

10. The silicon compound-containing liquid according to any one of claims 1 to 6, wherein the silicon compound-containing liquid further contains a compound containing one or more elements selected from the group consisting of Nb, Ta, Mo, W, Ti, Zr, Hf, Cu, Sn, and Zn.

11. A silicon compound-containing film, which is a silicon compound-containing film formed from the silicon compound-containing liquid according to any one of claims 1 to 6.

12. A method for producing a silicon compound-containing liquid, comprising: a mixing step of adding an acidic aqueous solution to a raw material containing silicon, followed by stirring at 15°C or higher and 50°C or lower to obtain a mixed liquid containing a precursor of a silicon compound; and a stirring step of adding a solution containing an organic nitrogen compound to the mixed liquid, followed by stirring at 15°C or higher and 50°C or lower to form a silicon compound-containing liquid.

13. The method for producing a silicon compound-containing liquid according to claim 12, wherein the raw material containing silicon contains at least one of tetraethoxysilane and sodium silicate.

14. The method for producing a silicon compound-containing liquid according to claim 12, wherein the acidic aqueous solution contains at least one of carboxylic acid, hydroxy acid, hydrochloric acid, sulfuric acid, and phosphoric acid.

15. The method for producing a silicon compound-containing liquid according to claim 12, wherein the organic nitrogen compound contains at least one of a primary amine, a secondary amine, and a quaternary ammonium salt.

16. A silicon compound-containing material, which is a silicon compound-containing material containing a silicon compound, wherein a maximum absorption intensity in a wavenumber region of 900 cm⁻¹ or more and 1000 cm⁻¹ or less as determined by a Fourier transform infrared spectrophotometer is defined as P1, a maximum absorption intensity in a wavenumber region of more than 1000 cm⁻¹ and 1100 cm⁻¹ or less is defined as P2, an intensity ratio of the P1 to the P2: P1/P2 is 0.9 to 1.5, and the silicon compound-containing material further has a maximum absorption intensity P3 in a wavenumber region of 2800 cm⁻¹ or more and 4000 cm⁻¹ or less.

17. The silicon compound-containing material according to claim 15, wherein the intensity ratio: P1/P2 is 1.1 to 1.4.

18. A silicon compound-containing film, which is a silicon compound-containing film formed from the silicon compound-containing material according to claim 16 or 17.

19. A method for producing a silicon compound-containing material, comprising a drying step of drying a mixed liquid containing a precursor of a silicon compound obtained by adding an acidic aqueous solution to a raw material containing silicon, followed by stirring at 15°C or higher and 50°C or lower to form a silicon compound-containing material.
